# EUROPEAN PATENT APPLICATION

(11) **EP 1 734 716 A1**
(43) Date of publication of application: **20.12.2006**
(21) Application number: 05013147.3
(22) Date of filing: 17.06.2005
(51) Int. Cl.: H04L 29/06

(54) **System for real-time transmitting and receiving of audio/video and handwriting information**

(71) Applicant: Wu, Chao-Hung, Hsin-Tien City, Taipei (TW)
(72) Inventor: Wu, Chao-Hung, Hsin-Tien City, Taipei (TW)
(74) Representative: Horak, Michael

(57) **Abstract**

A system for transmitting and receiving video, audio, and handwriting information in real time is provided. The system is implemented in a computer allowing a user to package, transmit or store the dynamic or static information such as video, audio, handwriting trace displayed on the video display to another person via the Internet. The system could replace the conventional way of electronic e-mail transmission and reception, make the composition of messages simpler, more convenient and intuitive, and also avoid virus infection through e-mails. The system could also be applied on handsets or PDAs.

## Description

### BACKGROUND OF THE INVENTION

### (a) Technical Field of the Invention

The present invention generally relates to information transmission and reception, and more particularly to a system for transmitting and receiving static and dynamic information such as audio, video, and handwriting in real time.

### (b) Description of the Prior Art

Until recently, despite the advances of technology, most common communications tools used by the general public are either the telephone which provides only voice exchange, or e-mail which usually provides only text exchange between the communicating parties. Telephone-based communications is convenient, but it is more costly and allows only voice to be transmitted or received. On the other hand, e-mail has gained widespread popularity due to the ubiquity of the Internet. E-mail, which is much cheaper and capable of one-to-many messaging, has become the dominant means of communications among modem people. However, e-mail is mainly text-based and, for information other than text can only be carried as an attachment to an e-mail. To transmit, receive, and process non-text information, a person has to be knowledgeable of the computer to a certain degree. Furthermore, composing an e-mail through typing utilizing the keyboard is burdensome for those who use English as a second language, and those who are not fluent typists.

### SUMMARY OF THE INVENTION

The primary purpose of the present invention is to The primary purpose of the present invention is to provide an easy-to-operate system for transmitting and receiving static and dynamic information such as audio, video, text, image information in real time. According to the means disclosed in the present invention, the present invention first identifies the source and format of the pieces of information to be processed. The information format includes image, audio, video, handwriting trace, etc. These pieces of information, after being identified, are then encapsulated one by one in their corresponding storage sections within an information packet. After all these pieces of information are processed, the information packet is then stored and/or transmitted to a receiving part over the Internet. The receiving party, after receiving the entire information packet, can immediately view all pieces of information carried in the information packet without resorting to various application programs. The present invention therefore overcomes the limitation of current e-mail systems, which requires text typing and familiarity with other application programs just in order to view non-text information carried in the e-mail. The present invention allows a user to read and reply to messages by some simple clicks.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a flow chart showing the information transmission and reception process according to the present invention.
FIG 2 is a schematic diagram showing various sources of information according to the present invention.
FIG 3 is a schematic diagram showing the structure of the information packet according to the present invention.
FIG 4 is a schematic diagram showing the message prompt window according to the present invention.
FIG 5 is a schematic diagram showing the overlaid message prompt windows according to the present invention.
FIGS. 6~8 are flow charts showing various flow of execution according to embodiments of the present invention.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

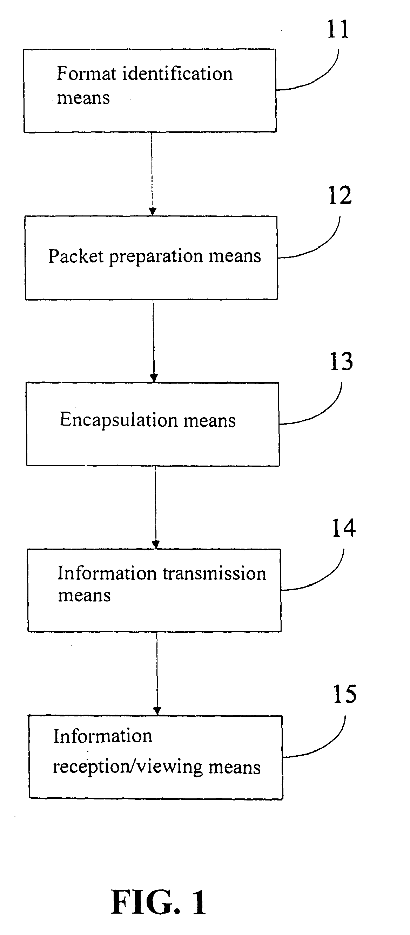

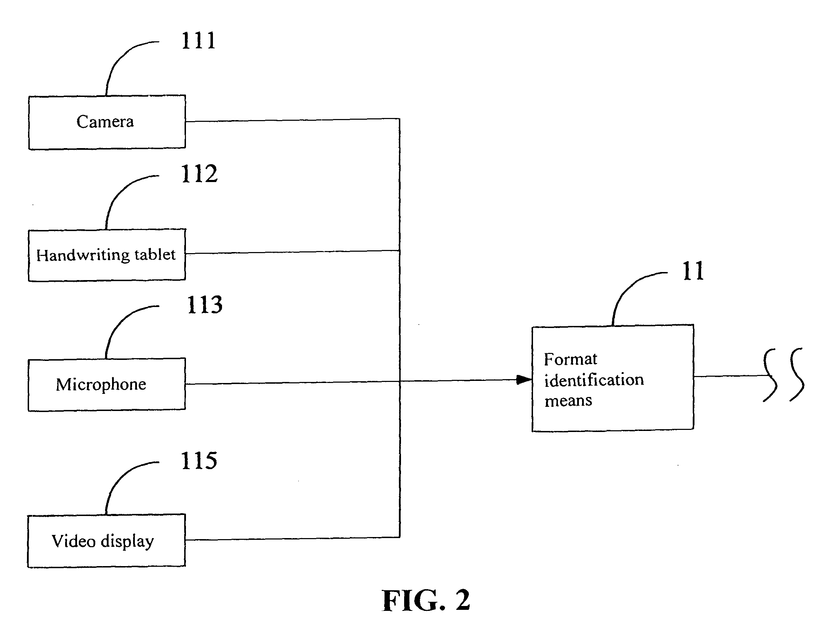

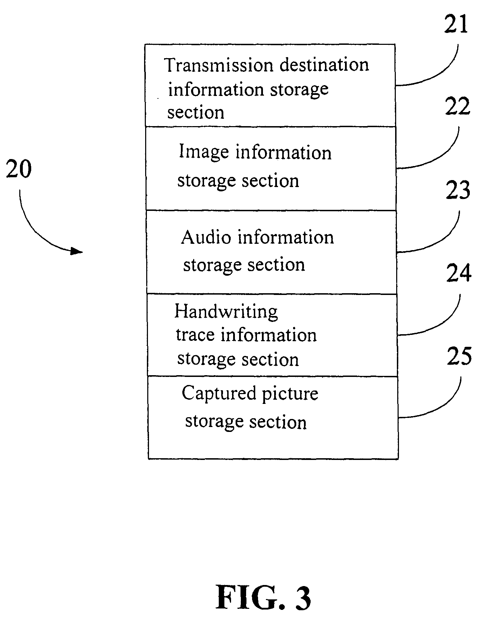

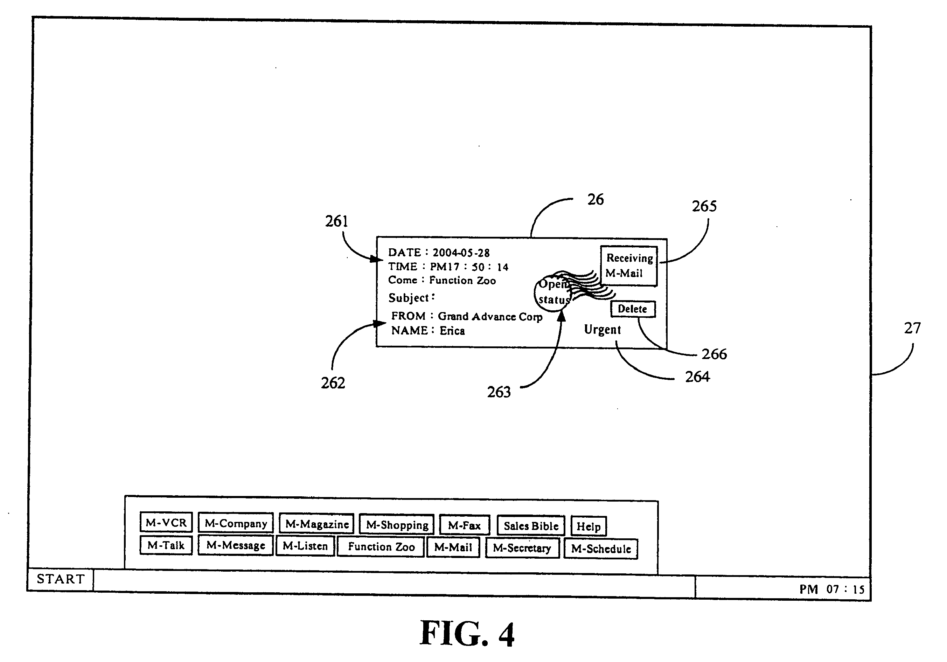

As illustrated in FIG 1, which is flow chart showing the information transmission and reception process according to the present invention, the present invention includes the following processing means.
A. A format identification means 11, which allows a central processing unit of a personal computer (or a notebook computer) to identify the source and format of a piece of information when the piece of information is received by the computer. All possible formats for static and dynamic information are possible such as video, image, audio, handwriting trace, etc. The piece of information is received via various mechanisms shown in FIG 2, which include the following.
   a. A camera 111 installed on the personal computer (or notebook computer) through which video or image information is captured;
   b. A handwriting tablet (or mouse) 112 connected to the personal computer (or notebook computer) through which handwriting trace information is obtained when a user writes on the handwriting tablet 112;
   c. A microphone 113 connected to the personal computer (or notebook computer) through which voice information is recorded; and
   d. A video display 115 through which the currently displayed static picture or the currently playing video is captured.
B. A packet preparation means, which prepares an information packet 20 having a number of pre-determined storage sections within a data storage device of a personal computer (or notebook computer). These sections, as illustrated in FIG 3, include a transmission destination information storage section 21, an image information storage section 22, an audio information storage section 23, a handwriting trace information storage section 24, a captured picture storage section 25. The transmission destination information storage section 21 may contain the address of a recipient (such as an e-mail address), the path and name of a file in the data storage device, or the account ID of a recipient. The image information storage section 22 is used for the storage of video or image information.
C. An encapsulation means, which stores the piece of information having a specific format identified by the format identification means into the corresponding storage section of the information packet.
D. An information transmission means, which transmits the information packet to a recipient specified in the transmission destination information storage section 21, such as a recipient's e-mail address or account ID, or the path and name of a file, via internal bus or Internet.
E. An information reception/viewing means, which displays a message prompt window 26 (as shown in FIG 4) as a topmost window on a video display 27 when the information packet is received by a personal computer (or notebook computer). A user could read the packet's content by clicking on the message prompt window 26, and the operating system of the computer would extract the information stored in each storage section of the packet sequentially and display these information, according to their formats, altogether on the video display 27 by a multiplexing player.

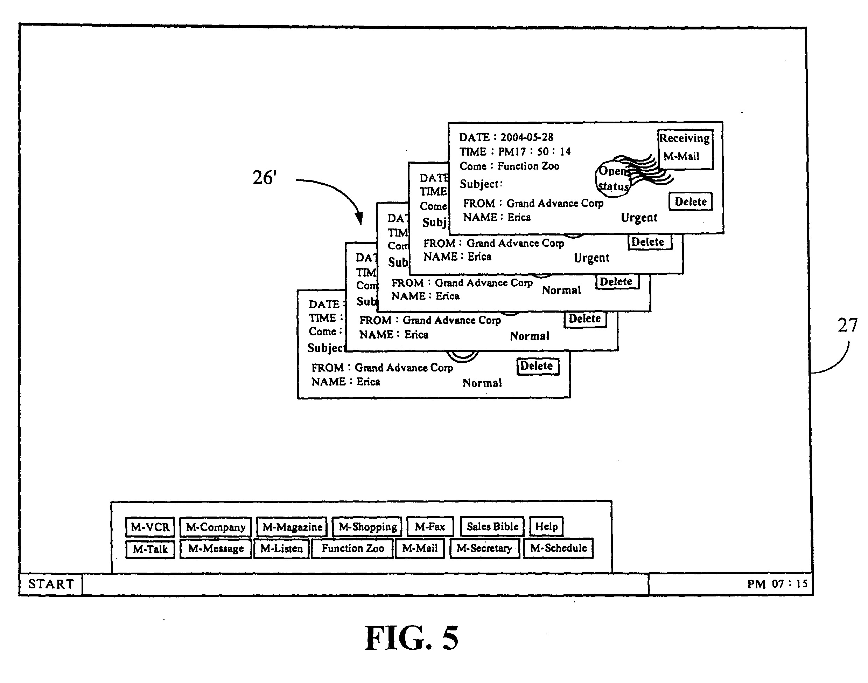

An embodiment of the aforementioned message prompt window 26 is illustrated in FIG 4. Another embodiment of the message prompt window 26' is illustrated in FIG 5, which involves multiple overlaid message prompt windows 26' on top of the video display 27. The content of a message prompt window 26 or 26' include at least the following:
- date and time 261 showing when the information packet is received;
- sender information 262 showing the sender's name, the name of the sender's company (or organization), the source of the information packet, and subject, etc.;
- open status 263 showing whether the content of the information packet has already been open and displayed;
- message level 264 showing the importance level of the information packet which could be Normal, Urgent, or Important;
- window control button 265 for closing the message prompt window 26; and
- window control button 266 for deleting the information packet.

Therefore, when an information packet 20 is received, a user would see a corresponding message prompt window 26 on the video display 27, and would be able to learn who the sender is and the importance level of the content. If the user would like to read the content of the information packet 20, the user could click on the open status 263 of the message prompt window 26, and the content of the information packet 20 would be displayed on the video display 27. If the user would like to, the user would use a reply means to reply to the sender or forward the content to another person. With the reply means, the user, while reading the content of the information packet 20, could utilize the handwriting tablet, camera, and microphone installed on the computer to work through the foregoing steps A-E and store the reply content into the information packet 20, and send it back to the original sender or another designated person

According to the present invention, the user, by means of the camera, handwriting tablet, and microphone installed on the computer, could store the captured video and image, the handwriting trace drawn on the handwriting tablet, etc., completely and directly into an information packet. Since Internet is used for the packet transmission, for a person or company already having a broadband connectivity (such as ADSL or leased line), the cost is very insignificant.

Based on the formats supported by the storage sections of an information packet, the present invention could have various applications as follows.
(1) If the information packet 20 is composed only of the transmission destination information storage section 21, the image information storage section 22, and the audio information storage section 23, the present invention could be embodied as a video/audio answering system.
(2) If the information packet 20 is composed of the transmission destination information storage section 21, the image information storage section 22, the audio information storage section 23, the handwriting trace information storage section 24, and the captured image storage section 25, the present invention could be embodied as an electronic reporting system or a documenting system comprising video, audio, and handwriting.
(3) If the information packet 20 is composed only of the handwriting trace information storage section 24, the present invention could be embodied as an electronic whiteboard system or an electronic notepad system.

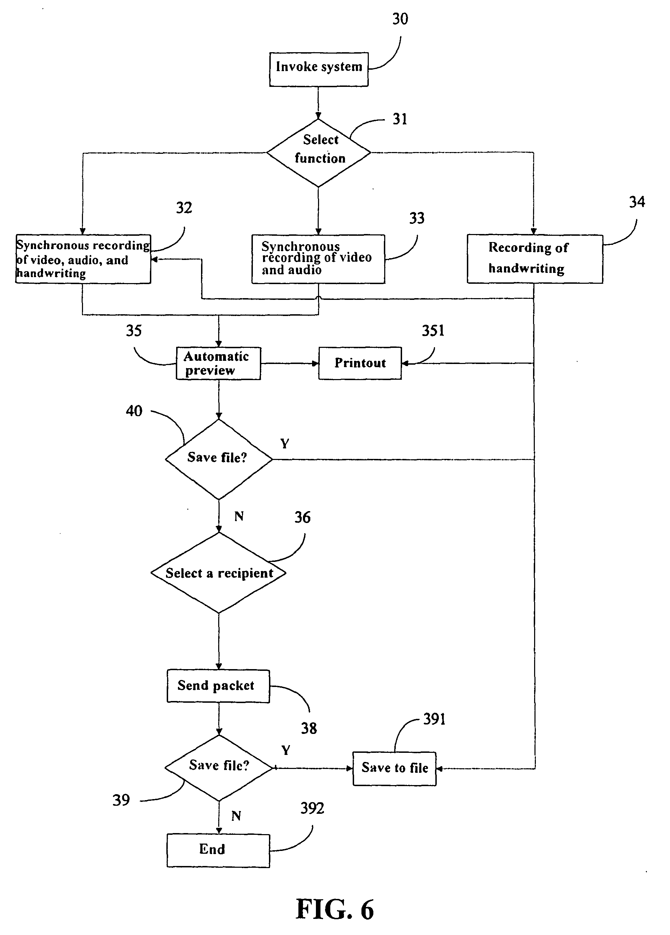

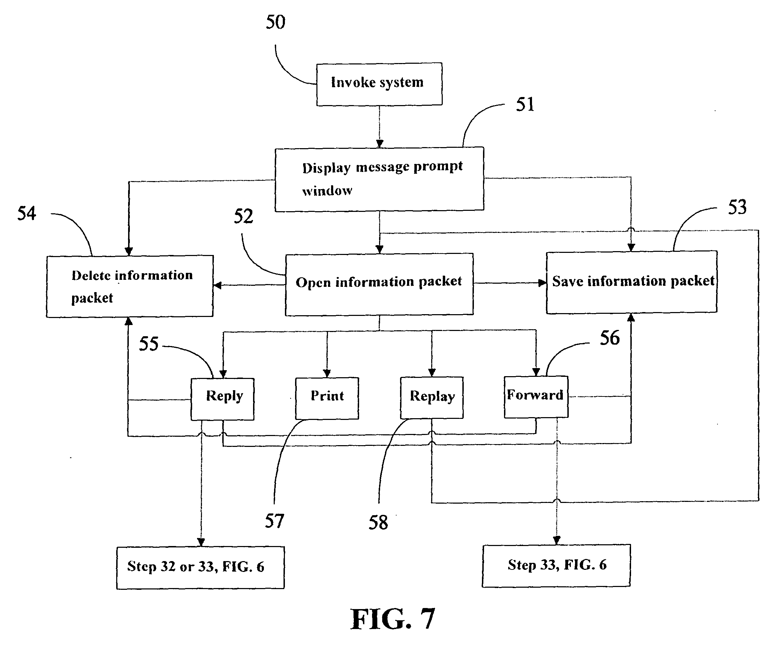

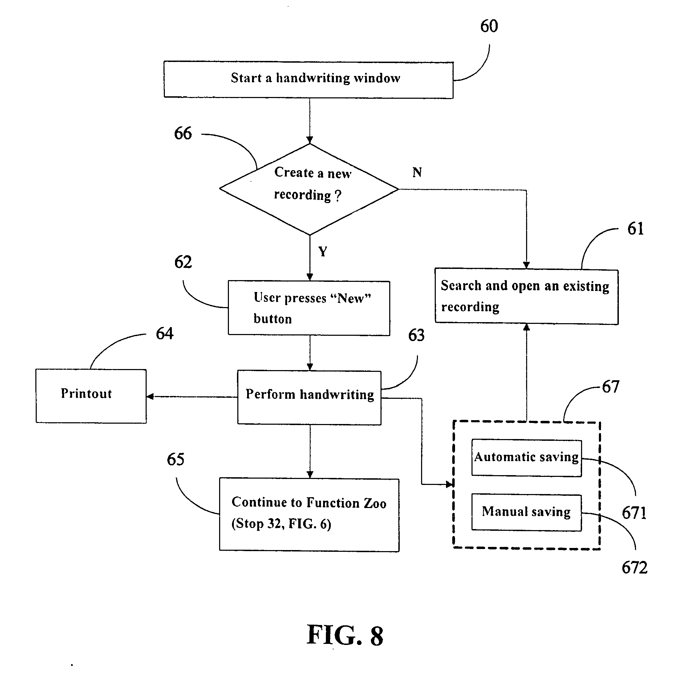

Using the means disclosed in the present invention, a real-time information transmission and reception system could be built, whose processing steps are illustrated in the flow chart of FIG 6. The system contains three major functions: Function Zoo, M-Message, and M-Writing, each of which is explained as follows. Function Zoo

Please refer to FIG 6. When the operating system of the computer is started, it automatically enters the step 30 which invokes the real-time information transmission and reception system and displays a user interface on the video display as shown in FIG 4. For the Function Zoo function, it is used to annotate an existing piece of information with video, audio, and handwriting. Therefore, the user first opens a data window showing the information he or she would like to annotate or report. Then, in step 31, the present invention waits for user's choice of desired function. If the user chooses Function Zoo, the flow of execution enters the step 32, which begins a synchronous recording of video (captured from the camera 111), audio (captured from the microphone 113), and handwriting (captured from the handwriting tablet 112). When the recording is over, the recorded content is presented automatically in a preview window in step 35. At this point of time, the user could choose to print out the content of the preview window in step 351. This is actually a screen capture function, which allows a user to print the content of any window on the video display, and/or save it to a file in steps 40 and steps 391. In other words, this function allows a user to capture any part of the video display and save it into a file, or save it along with video/audio explanation. In this way, any kind of report or document could be viewed later with vivid video/audio explanation. Then the user could decide whether to send out the content of the preview window in an information packet in step 36 by choosing a recipient from an address book. Once a recipient is determined, the system would ask for the information packet's subject (and importance level, etc.) and continue to step 38 to send out the packet. Then the user could decide in step 39 whether to save the content of the preview window into a file. If yes, this is done in step 391, otherwise the process is ended in step 392.

Please refer to FIG 7. After the recipient invokes the real-time information transmission and reception system in step 50 and an information packet has arrived, the system would display the message prompt window as shown in FIG 4 in step 51. Depending on how the information packet is prepared (by Function Zoo, M-Message, etc.), the message prompt window would be different using different colors and/or styles. The following information about the received information packet would be displayed in the message prompt window:
(a1) date when the information packet is prepared and sent;
(b1) time when the information packet is prepared and sent;
(c1) how the information packet is prepared;
(d1) the name of the sender's company;
(e1) the name of the sender;
(f1) whether to open the information packet;
(g1) whether to save the information packet;
(h1) whether to delete the information packet;
(i1) the importance level of the information packet; and
(j1) the subject of the information packet.

The recipient could choose to save the information packet in step 53, delete the information packet in step 54, or open the information packet in step 52. After the information packet is open for reading after step 52, the recipient has the following options:
(a) reply (in step 55) or forward the information packet (in step 56);
(b) after replying or forwarding the information packet in steps 55 and 56, delete the information packet in step 54;
(c) after replying or forwarding the information packet in steps 55 and 56, save the information packet in step 53;
(d) print the information packet in step 57;
(e) replay the information packet in step 58;
(f) delete the information packet in step 54; and
(g) save the information packet into a file in step 53.

If the recipient chooses to reply or forward the information packet, the system would automatically activate the same authoring environment as the one used to prepare the information packet as depicted in FIG 6. For example, if the recipient chooses to reply, after the step 55 of FIG 7, the flow of execution would continue to the step 32 or 33 of FIG 6. If the recipient chooses to forward, after the step 56 of FIG 7, the original information packet would be kept and the flow of execution would continue to the step 34 of FIG 6. The original information packet along with the newly created explanation would then be forwarded out together.

### M-Message

Please refer to FIG 6 again. When the operating system of the computer is started, it automatically enters the step 30 which invokes the real-time information transmission and reception system and displays a user interface on the video display. Then, in step 31, the present invention waits for user's choice of desired function. If the user chooses M-Message, the flow of execution enters the step 33, which begins a synchronous recording of video (captured form the camera 111) and audio (captured from the microphone 113). When the recording is over, the recorded content is presented automatically in a preview window in step 35. At this point of time, the user could choose to save the content of the preview window into a file in step 40. In other words, the M-Message function could be used like a recorder for keeping a record of the user's own video and voice in a file for later retrieval and reference. Then the user could decide whether to send out the content of the preview window in an information packet in step 36 by choosing a recipient from an address book. Once a recipient is determined, the system would ask for the information packet's subject (and importance level, etc.) and continue to step 3 8 to send out the packet. Then the user could decide in step 39 whether to save the content of the preview window into a file. If yes, this is done in step 391, otherwise the process is ended in step 392.

Similarly, after the information packet is open by the recipient for reading after step 52 of FIG 7, the recipient has the following options:
(a) reply (in step 55) or forward the information packet (in step 56);
(b) after replying or forwarding the information packet in steps 55 and 56, delete the information packet in step 54;
(c) after replying or forwarding the information packet in steps 55 and 56, save the information packet in step 53;
(d) print the information packet in step 57;
(e) replay the information packet in step 58;
(f) delete the information packet in step 54; and
(g) save the information packet into a file in step 53.

If the recipient chooses to reply or forward the information packet, the system would automatically activate the same authoring environment as the one used to prepare the information packet as depicted in FIG 6. For example, if the recipient chooses to reply, after the step 55 of FIG 7, the flow of execution would continue to the step 32 or 33 of FIG 6. If the recipient chooses to forward, after the step 56 of FIG 7, the original information packet would be kept and the flow of execution would continue to the step 34 of FIG 6. The original information packet along with the newly created explanation would then be forwarded out together.

### M-Write

Please refer to both FIGS. 6 and 8. When the operating system of the computer is started, it automatically enters the step 30 which invokes the real-time information transmission and reception system and displays a user interface of the present invention on the video display. Then, in step 31, the present invention waits for user's choice of desired function. If the user chooses M-Write, the flow of execution enters the step 34, which begins a recording of handwriting (captured from the handwriting tablet 112). The details of step 34 are depicted in FIG 8, which starts a handwriting window in step 60. Then the user could decide whether to start a new recording in step 66. If not, the user could search and open an existing recording in step 61 to modify it. If the user presses a "New" button in step 62 to start a new recording, the system begins a recording of the user's handwriting on the handwriting tablet 112. When the recording is over, the user could choose to print the handwriting in step 64, or continue to the Function Zoo function in step 65 to have a synchronous recording of video, audio, and handwriting (in step 32 of FIG 6) for association with the newly created handwriting information. When the recording is over, the recorded content is presented automatically in a preview window in step 35. At this moment, the user could choose whether to save the content into a file in step 391 and to send it out in an information packet in step 36. Once a recipient is determined, the system would continue to step 38 to send out the packet. Then the user could decide in step 39 whether to save the content of the preview window into a file. If yes, this is done in step 391, otherwise the process is ended in step 392.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention,

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A system for real-time information transmission and reception between computing devices via Internet comprising:
a format identification means, which allows a central processing unit of said computing device to identify the source and format of a piece of information when said piece of information is received by said computer;
a packet preparation means, which prepares an information packet having a plurality of pre-determined storage sections within a data storage device of said computing device, said plurality of storage sections comprising a transmission destination information storage section, an image information storage section, an audio information storage section, a handwriting trace information storage section, and a captured picture storage section;
an encapsulation means, which stores a piece of information having a specific format identified by said format identification means into a corresponding storage section of said information packet;
an information transmission means, which transmits said information packet to a location specified in said transmission destination information storage section via Internet; and
an information reception/viewing means, which displays the content of each storage section of said information packet in a message prompt window as a topmost window on a video display when said information packet is received by said computing device.

2. The system for real-time information transmission and reception according to claim 1, wherein the format of said piece of information is one of the following: video, image, audio, and handwriting trace.

3. The system for real-time information transmission and reception according to claim 1, wherein said transmission destination information storage section comprises an e-mail address of a recipient.

4. The system for real-time information transmission and reception according to claim 1, wherein said transmission destination information storage section comprises a path and a name of a file in said data storage device.

5. The system for real-time information transmission and reception according to claim 1, wherein said transmission destination information storage section comprises an account ID of a recipient.

6. The system for real-time information transmission and reception according to claim 1, wherein the content of said message prompt window comprises:
a date and a time showing when said information packet is received;
a sender information showing a sender's name, the name of said sender's company (or organization), the source of said information packet, and a subject;
an open status showing whether the content of said information packet has already been open and displayed;
a message level showing the importance level of said information packet; and
a plurality of window control buttons for closing and deleting said message prompt window.

7. The system for real-time information transmission and reception according to claim 6, wherein said message level is one of the following: Normal, and Urgent.

8. The system for real-time information transmission and reception according to claim 1, wherein said piece of information is an image information captured from a camera installed on said computing device.

9. The system for real-time information transmission and reception according to claim 1, wherein said piece of information is a handwriting trace information captured from a handwriting tablet or mouse installed on said computing device.

10. The system for real-time information transmission and reception according to claim 1, wherein said piece of information an audio information captured from a microphone installed on said computing device.

11. The system for real-time information transmission and reception according to claim 1, wherein said piece of information is a static picture captured from a video display connected to said computing device.

12. The system for real-time information transmission and reception according to claim 1, further comprising an information display means for showing the content of said information packet altogether simultaneously on a video display of said computing device.

13. The system for real-time information transmission and reception according to claim 1, further comprising a reply means allowing a user to capture from a camera, a handwriting tablet, a microphone, and a video display and to store the captured information into said information packet.

14. A system for real-time information transmission and reception between computing devices via Internet comprising:
a video/audio information capturing means, which captures a piece of video information and a piece of audio information from a video display of said computing device;
a packet preparation means, which prepares an information packet having a plurality of pre-determined storage sections within a data storage device of said computing device, said plurality of storage sections comprising a transmission destination information storage section, an image information storage section for storing said piece of video information, and an audio information storage section for storing said piece of audio information;
an information transmission means, which transmits said information packet to a location specified in said transmission destination information storage section via Internet; and
an information reception/viewing means, which displays the content of each storage section of said information packet in a message prompt window as a topmost window on a video display when said information packet is received by said computing device.

15. The system for real-time information transmission and reception according to claim 14, wherein said transmission destination information storage section comprises an e-mail address of a recipient.

16. The system for real-time information transmission and reception according to claim 14, wherein said transmission destination information storage section comprises a path and a name of a file in said data storage device.

17. The system for real-time information transmission and reception according to claim 14, wherein said transmission destination information storage section comprises an account ID of a recipient.

18. The system for real-time information transmission and reception according to claim 14, wherein the content of said message prompt window comprises:
a date and a time showing when said information packet is received;
a sender information showing a sender's name, the name of said sender's company (or organization), the source of said information packet, and a subject;
an open status showing whether the content of said information packet has already been open and displayed;
a message level showing the importance level of said information packet; and
a plurality of window control buttons for closing and deleting said message prompt window.

19. The system for real-time information transmission and reception according to claim 18, wherein said message level is one of the following: Normal, and Urgent.

20. The system for real-time information transmission and reception according to claim 14, further comprising an information display means for showing the content of said information packet altogether simultaneously on a video display of said computing device.

21. The system for real-time information transmission and reception according to claim 14, further comprising a reply means allowing a user to capture from a camera, a handwriting tablet, a microphone, and a video display and to store the captured information into said information packet.

22. A system for real-time information transmission and reception between computing devices via Internet comprising:
a video/audio information capturing means, which captures a piece of handwriting trace information from a video display of said computing device and records a piece of captured picture information from a currently active window;
a packet preparation means, which prepares an information packet having a plurality of pre-determined storage sections within a data storage device of said computing device, said plurality of storage sections comprising a transmission destination information storage section, a handwriting trace information storage section for storing said piece of handwriting trace information, and a captured picture storage section for storing said piece of captured picture information;
an information transmission means, which transmits said information packet to a location specified in said transmission destination information storage section via Internet; and
an information reception/viewing means, which displays the content of each storage section of said information packet in a message prompt window as a topmost window on a video display when said information packet is received by said computing device.

23. The system for real-time information transmission and reception according to claim 22, wherein said transmission destination information storage section comprises an e-mail address of a recipient.

24. The system for real-time information transmission and reception according to claim 22, wherein said transmission destination information storage section comprises a path and a name of a file in said data storage device.

25. The system for real-time information transmission and reception according to claim 22, wherein said transmission destination information storage section comprises an account ID of a recipient.

26. The system for real-time information transmission and reception according to claim 22, wherein the content of said message prompt window comprises:
a date and a time showing when said information packet is received;
a sender information showing a sender's name, the name of said sender's company (or organization), the source of said information packet, and a subject;
an open status showing whether the content of said information packet has already been open and displayed;
a message level showing the importance level of said information packet; and
a plurality of window control buttons for closing and deleting said message prompt window.

27. The system for real-time information transmission and reception according to claim 26, wherein said message level is one of the following: Normal, and Urgent.

28. The system for real-time information transmission and reception according to claim 22, further comprising an information display means for showing the content of said information packet altogether simultaneously on a video display of said computing device.

29. The system for real-time information transmission and reception according to claim 22, further comprising a reply means allowing a user to capture from a camera, a handwriting tablet, a microphone, and a video display and to store the captured information into said information packet.

30. The system for real-time information transmission and reception according to claim 22, further comprising saving the content of said information packet into a file.
